# EUROPEAN PATENT APPLICATION

(11) **EP 4 598 146 A1**
(43) Date of publication of application: **06.08.2025**
(21) Application number: 23873267.1
(22) Date of filing: 27.09.2023
(51) Int. Cl.: H04W 52/02, H04W 76/28, H04W 24/08, H04W 72/23

(54) **METHOD AND DEVICE FOR TRANSMITTING/RECEIVING WIRELESS SIGNAL IN WIRELESS COMMUNICATION SYSTEM**

(30) Priority: 29.09.2022 KR 20220124747
(71) Applicant: LG Electronics Inc., Yeongdeungpo-gu Seoul 07336 (KR)
(72) Inventor: LEE, Sunghoon, Seoul 06772 (KR); LEE, Youngdae, Seoul 06772 (KR); KIM, Jaehyung, Seoul 06772 (KR); YANG, Suckchel, Seoul 06772 (KR); HWANG, Seunggye, Seoul 06772 (KR)
(74) Representative: Frenkel, Matthias Alexander
(86) International application number: PCT/KR2023/015131
(87) International publication number: WO 2024/072160

(57) **Abstract**

A method by which a terminal receives a signal in a wireless communication system, according to one embodiment of the present disclosure, comprises: receiving a plurality of discontinuous reception (DRX) configurations; receiving physical downlink control channel (PDCCH) monitoring adaptation information related to at least one of the plurality of DRX configurations; and monitoring a PDCCH on the basis of each DRX on-duration of the plurality of DRX configurations and the PDCCH monitoring adaptation information, wherein a first PDCCH can be monitored based on first PDCCH monitoring adaptation information in both a first time duration and a second time duration on the basis of an interval or overlap between a first time duration of a first DRX configuration and a second time duration of a second DRX configuration from among the plurality of DRX configurations.

## Description

### TECHNICAL FIELD

The present disclosure relates to a wireless communication system, and more particularly to a method and apparatus for transmitting or receiving an uplink/downlink signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing a wireless signal transmission/reception procedure and an apparatus therefor.

Other technical objects may be derived from the embodiments disclosed in the detailed description.

### TECHNICAL SOLUTION

According to an aspect, a method of receiving a signal by a user equipment (UE) in a wireless communication system may include receiving a plurality of discontinuous reception (DRX) configurations, receiving physical downlink control channel (PDCCH) monitoring adaptation information related to at least one of the plurality of DRX configurations, and monitoring a PDCCH based on each DRX on-duration of the plurality of DRX configurations and the PDCCH monitoring adaptation information. Based on a gap or overlap between a first time period of a first DRX configuration and a second time period of a second DRX configuration among the plurality of DRX configurations, monitoring of a first PDCCH may be performed during the first time period and the second time period commonly based on first PDCCH monitoring adaptation information.

Based on the first time period and the second time period at least partially overlapping, the monitoring of the first PDCCH may be performed throughout the first time period and the second time period based on the first PDCCH monitoring adaptation information.

Based on the second time period starting within a predetermined time from an end of the first time period, the monitoring of the first PDCCH started in the first time period may be performed until an end of the second time period.

The first PDCCH monitoring adaptation information may be related to the first DRX configuration. The first time period may be a DRX on-duration or DRX active time of the first DRX configuration, and the second time period may be a DRX on-duration or DRX active time of the second DRX configuration. The first time period may start earlier than the second time period.

Monitoring of a second PDCCH may be performed based on second PDCCH monitoring adaptation information during a third time period of the second DRX configuration different from the second time period.

The first PDCCH monitoring adaptation information may be for monitoring a first group of search space sets or skipping monitoring of at least one search space set among search space sets configured for the UE.

The first time period of the first DRX configuration and the second time period of the second DRX configuration may be configured according to different DRX cycles.

According to another aspect, a computer-readable recording medium storing a program for performing the above-described method of receiving a signal may be provided.

According to another aspect, the above-described UE may be provided.

According to another aspect, a signal processing device configured to control the above-described UE may be provided.

According to another aspect, a method of transmitting a signal by a base station (BS) in a wireless communication system may include transmitting a plurality of DRX configurations, transmitting PDCCH monitoring adaptation information related to at least one of the plurality of DRX configurations, and transmitting a PDCCH based on each DRX on-duration of the plurality of DRX configurations and the PDCCH monitoring adaptation information. Based on a gap or overlap between a first time period of a first DRX configuration and a second time period of a second DRX configuration among the plurality of DRX configurations, transmission of a first PDCCH may be performed during the first time period and the second time period commonly based on first PDCCH monitoring adaptation information.

According to another aspect, a computer-readable recording medium storing a program for performing the above-described method of transmitting a signal may be provided.

According to another aspect, the above-described BS may be provided.

### ADVANTAGEOUS EFFECTS

According to an embodiment, a signal may be transmitted/received more accurately and more efficiently in a wireless communication system.

Other technical effects may be derived from the embodiments disclosed in the detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink control channel (PDCCH) transmission and reception process.
FIG. 6 illustrates an exemplary physical downlink shared channel (PDSCH) reception and acknowledgement/negative acknowledgement (ACK/NACK) transmission process.
FIG. 7 illustrates an exemplary physical uplink shared channel (PUSCH) transmission process.
FIGS. 8 to 10 are diagrams illustrating DRX-related operations.
FIGS. 11 and 12 are diagrams illustrating multi-DRX overlapped periods related to monitoring adaptation according to embodiments.
FIG. 13 is a diagram illustrating monitoring adaptation in a multi-DRX environment according to an embodiment.
FIG. 14 is a diagram illustrating signal reception of a UE according to an embodiment.
FIG. 15 is a diagram illustrating signal transmission of a BS according to an embodiment.
FIGS. 16 to 19 illustrate an example of a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.
- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

### Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

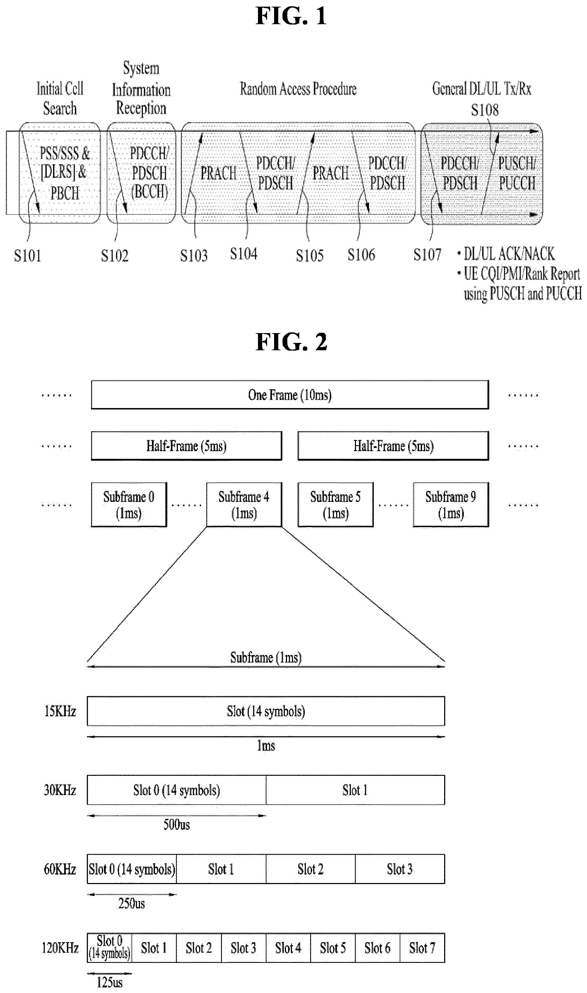

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

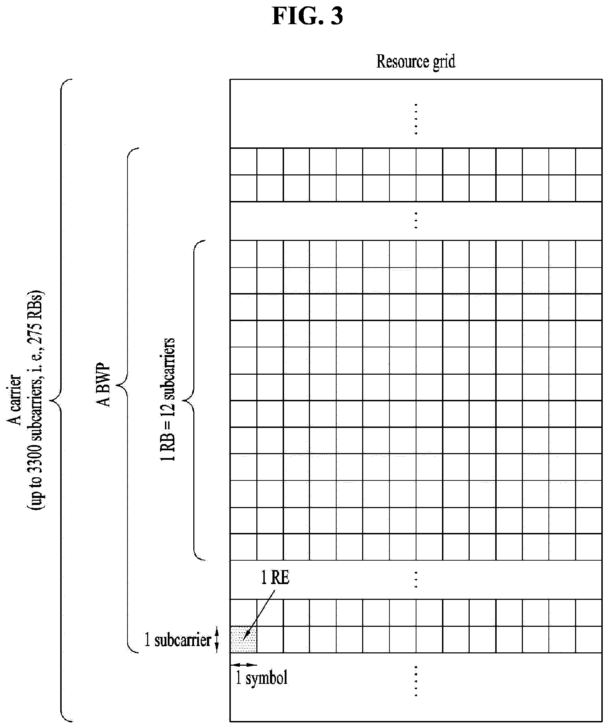

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

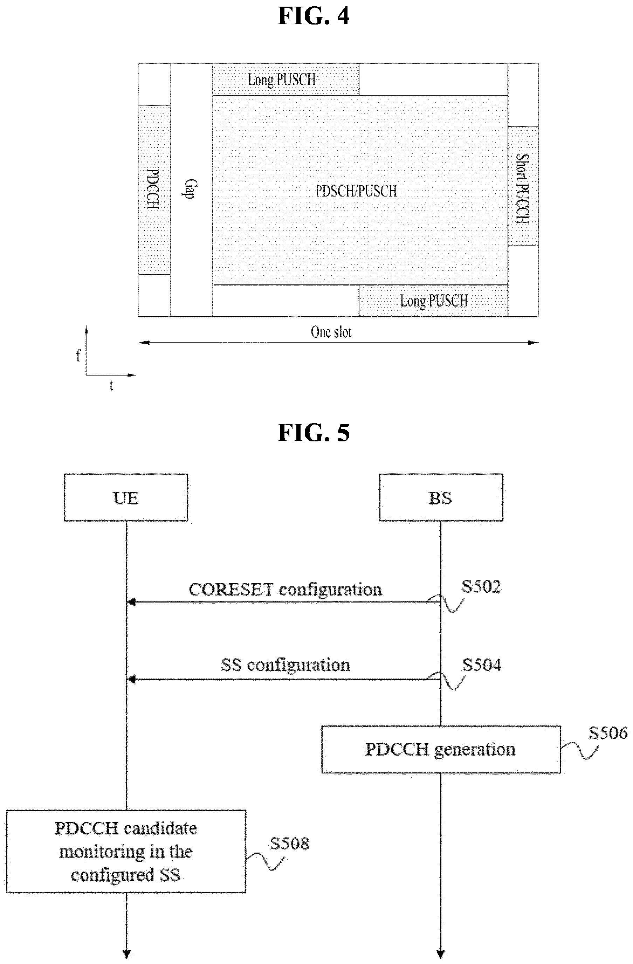

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.
- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.
- searchSpaceId: Indicates the ID of an SS.
- controlResourceSetId: Indicates a CORESET associated with the SS.
- monitoringSlotPeriodicity AndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.
- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

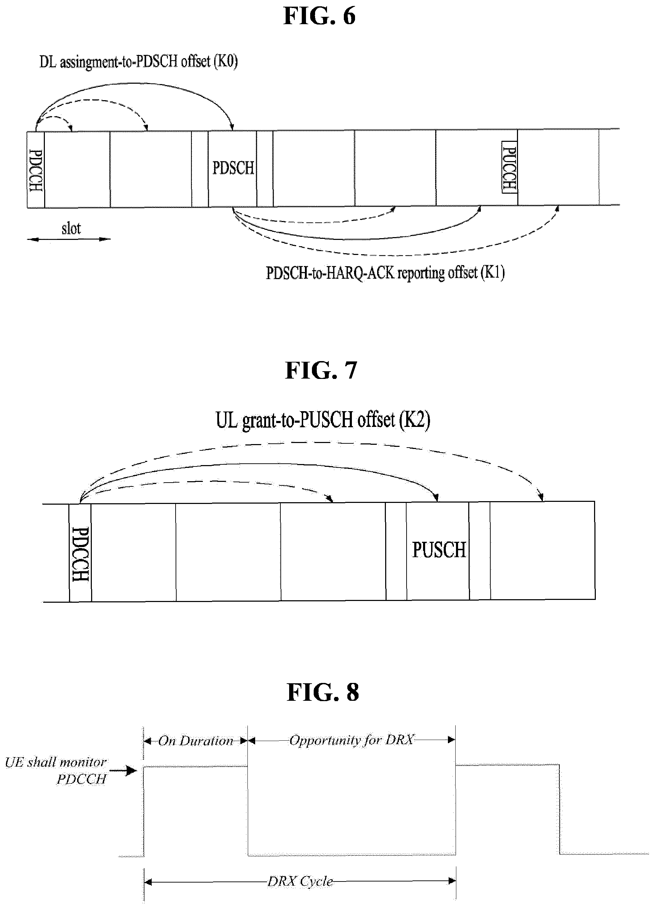

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.
- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### DRX (Discontinuous Reception)

### (1) RRC_CONNECTED DRX

FIG. 8 is a diagram illustrating a DRX operation of a UE.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

**[Table 5]**

| | Type of signals | UE procedure |
|---|---|---|
| 1st step | RRC signalling (MAC-Cell GroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

Value of drx-InactivityTimer: defines the duration of a time period during which the UE is awake after a PDCCH occasion in which a PDCCH indicating initial UL or DL data has been detected

Value of drx-HARQ-RTT-TimerDL: defines the duration of a maximum time period until a DL retransmission is received after reception of a DL initial transmission.

Value of drx-HARQ-RTT-TimerDL: defines the duration of a maximum time period until a grant for a UL retransmission is received after reception of a grant for a UL initial transmission.

drx-LongCycleStartOffset: defines the duration and starting time of a DRX cycle.

drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

### (2) RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

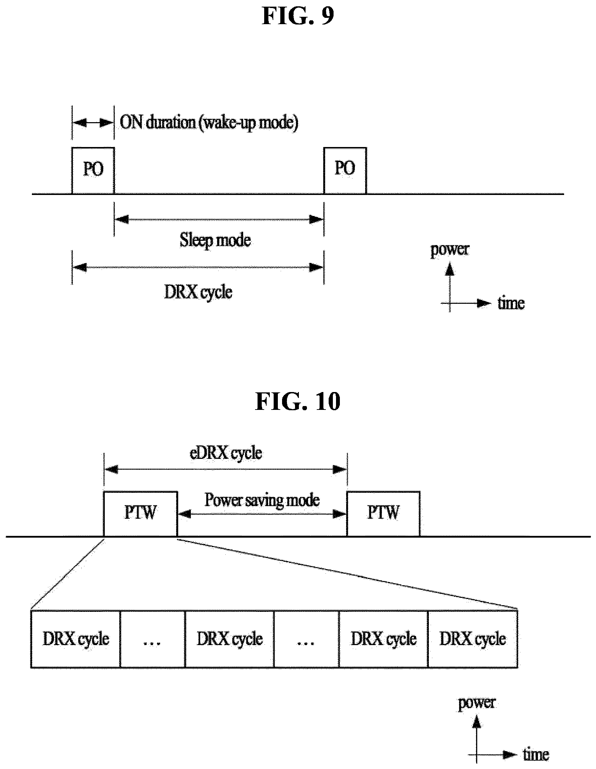

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

### Monitoring adaptation for multiple DRX

To support XR services (FS_NR_XR_enh), various scenarios and candidate technologies have recently been discussed in the Rel-18 NR standard. The XR services generally require high data rates and low latency, and various techniques for power saving are considered because UEs are expected to consume much power. A traffic model and requirements of the XR services are defined in TR38.838, a technical report of the Rel-17 XR study. The XR services generally require 60 fps (frames per second), and sometimes 120 fps. A frame in the XR traffic model may be understood as the same as a packet received in a communication environment. To process such a periodic transmission and achieve power saving, a DRX operation and a monitoring adaptation operation may be considered for a UE supporting the XR services.

A DRX operation of a UE will be described briefly. DRX used to reduce unnecessary power consumption of a UE in NR has the following characteristics. A DRX structure for a UE in the RRC_IDLE state and a DRX structure for a UE in the RRC_CONNECTED state are defined separately, and both DRX structures are designed such that a period in which a UE may expect to receive a DL signal is defined to occur periodically and unnecessary power consumption is reduced in other periods. Particularly in C-DRX (i.e. DRX applied to a UE in the RRC_CONNECTED state), the start position of an On-duration occurs periodically based on the Rel-16 standard of NR, and the length of a configurable cycle (i.e. DRX cycle) may be determined by a higher layer parameter provided to a UE by a BS.

A monitoring adaptation operation refers to an operation of adjusting (generally reducing) the number of monitoring operations that a UE should perform. The UE may be configured with up to 10 SS sets in each BWP and monitor PDCCH candidates included in the SS sets. Since the UE should perform blind decoding (BD) for a PDCCH whose reception time and DCI format are not known, PDCCH monitoring accounts for a large portion of power consumption. Monitoring adaptation refers to PDCCH monitoring skipping (hereinafter, skipping) and SS set group (SSSG) switching (hereinafter, switching). Skipping is defined as an operation of stopping PDCCH monitoring for a specified duration, and switching is defined as an operation of stopping monitoring SS sets included in a current specific SSSG and starting monitoring SS sets included in another SSSG.

For an XR service, multiple flows such as audio and video may be considered in addition to a single flow. In this case, the multiple flows may differ in attributes such as periodicity and size, and to support this, multiple DRXs may be configured for the UE. In multiple DRX configurations, each DRX may have a different cycle and a different drx-onDurationTimer length.

For a UE configured with multiple DRXs, Active Times of the multiple DRXs may overlap each other. In this case, monitoring adaptation may be indicated individually or commonly for the DRXs. In other words, common or independent monitoring adaptation may be configured/indicated for multiple DRX Active Times. Accordingly, monitoring adaptation may be effectively configured/indicated for the UE configured with the multiple DRXs.

A method is proposed below for indicating monitoring adaptation to a UE configured with multiple DRXs and operating the UE accordingly.

For example, the UE may be configured with multiple DRXs to support a specific service (e.g., XR service). In this case, each DRX may have a different cycle or a different length and operation of a timer that defines an Active Time. Therefore, each DRX may operate independently, and as a result, a plurality of DRX Active Times may overlap in a specific period. Since a monitoring adaptation operation is indicated/performed based on a DRX Active Time, it may not be clear which DRX the monitoring adaptation indication/operation is for in the overlapped period between the multiple DRX Active Times.

To solve this problem, a method of configuring common or independent monitoring adaptation for a UE configured with multiple DRXs is proposed. A UE operation may be performed commonly or independently according to one indication in a period during which multiple DRX Active Times overlap.

A method is proposed for identifying a DRX which a monitoring adaptation indication is for, when monitoring adaptation is independently configured/performed for each DRX. The UE may identify a DRX which indicated monitoring adaptation is for and perform the indicated operation accordingly in an environment where multiple DRXs are configured.

An XR service taken as an example below is an applicable example, and thus the application of the proposed methods is not limited to the XR service. For example, it may be extended to all signals that a UE receives with a certain periodicity. The proposed methods are applicable to all types of transmission and reception methods expected by a BS and a UE. Although the following description is given in the context of an NR system by way of example, it is obvious that the proposed methods are applicable to all wireless communication transmission and reception structures and services.

For clarity of description, distinction is made between methods or options in the following description, and the methods or options are not to be interpreted as meaning that each should be implemented as an independent invention. For example, although the methods/options described below may be implemented individually, at least some of them may be implemented in combination, unless contradicting each other.

### [Method 1] Common monitoring adaptation operation for multiple DRXs

When a plurality of DRX Active Times are configured for the UE, monitoring adaptation may be commonly configured/indicated for a plurality of DRXs. Although corresponding methods are described in the context of a scheduling DCI-based indication/operation, the methods may also be applied to non-scheduling DCI.

### [Method 1-1] Common monitoring adaptation configuration for multiple DRXs

According to the Rel-17 standard, the UE may be configured with up to three search space set (SS set) groups and/or three skipping durations for each BWP.

According to an embodiment, SS set groups/skipping durations configured for each BWP may be commonly applied to a plurality of DRXs. Accordingly, the plurality of DRXs may be distinguished by cycles and DRX timers. For example, DRXs configured to receive DL video and audio may be distinguished by cycles and drx-onDurationTimer and drx-inactivityTimer.

### [Method 1-2] Common monitoring adaptation indication and operation for overlapped period between which multiple DRXs

In the case where SS set groups/skipping durations are configured commonly for a plurality of DRXs, when the UE receives a monitoring adaptation indication for a period in which the plurality of DRXs overlap, the UE may perform a common monitoring adaptation operation in the plurality of DRXs. For example, when DRX0 and DRX1 are configured for the UE and have different cycles and timers, DRX0 and DRX1 may overlap only in a specific time period. When the UE receives a monitoring adaptation indication for this overlapped period, the UE may perform the indicated monitoring adaptation operation in both DRX0 and DRX1. When monitoring skipping is indicated, the UE may stop all PDCCH monitoring operations in DRX0 and DRX1 during the skipping duration. When SSSG switching is indicated, the UE switches a monitored SSSG in DRX0 and DRX1.

According to an embodiment, a period in which a plurality of DRXs overlap each other may be defined as follows.

### 1) Union of drx-onDurationTimers

The corresponding period may be defined/interpreted as the union of drx-onDurationTimers.

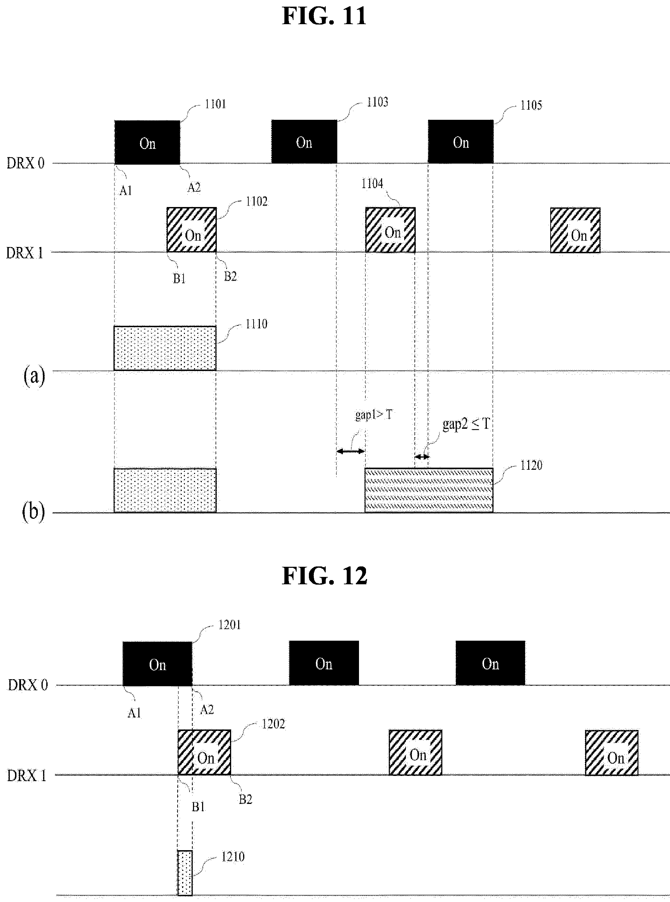

For example, referring to FIG. 11(a), an on duration timer 1101 (of a first DRX cycle) in DRX0 starts in slot A1 and ends in slot A2, and an on duration timer 1102 (of the first DRX cycle) in DRX1 starts in slot B1 and ends in slot B2, satisfying a relationship of A1<B1<A2<B2. A time period 1101 from slot A1 to slot B2 may be defined as a period in which the plurality of DRXs overlap.

As an additional example, a time gap equal to or less than a specific time duration T may be further considered. Even if a time gap equal to or less than a specific value exists between a plurality of drx-onDurationTimers, it is defined as a period in which corresponding DRXs overlap, and the overlapped period may be defined as the union of the drx-onDurationTimers. For example, referring to FIG. 11(b), the gap between the expiration of an on duration timer 1103 of a second DRX cycle in DRX0 and the start of an on duration timer 1104 of the second DRX cycle in DRX1 is gap 1, and since gap 1 exceeds the time duration T, it is not included in the overlapped period. However, the gap between the expiration of the on duration timer 1104 of the second DRX cycle in DRX1 and the start of an on duration timer 1105 of a third DRX cycle in DRX0 is gap 2, and since gap 2 is less than or equal to the time duration T, it is included in the overlapped period. Therefore, according to the method of FIG. 11(b), a time period 1120 (not only the time period 1101) may be defined as the period in which the plurality of DRXs overlap.

The method of FIG. 11(b) is advantageous in that when multiple drx-onDurationTimers are located spaced apart from each other by a small gap (e.g., 1 slot), indicated monitoring adaptation (e.g., skipping) is not terminated upon termination of each DRX, but is performed in the next DRX despite the gap, thereby improving the power saving effect.

For termination of a skipping operation upon DRX termination, Table 6 described below is referred to.

### 2) Union of DRX Active Times

The corresponding period may be defined/interpreted as the union of DRX Active Times. According to the standard document TS38.321, a DRX Active Time is defined as in Table 6 below.

**[Table 6]**

| |
|---|
| When DRX is configured, the Active Time for Serving Cells in a DRX group includes the time while: |
| *- drx-onDurationTimer* or *drx-InactivityTimer* configured for the DRX group is running; or |
| *- drx-RetransmissionTimerDL* or *drx-RetransmissionTimerUL* is running on any Serving Cell in the DRX group; or |
| *- ra-ContentionResolutionTimer* (as described in clause 5.1.5) or *msgB-ResponseWindow* (as described in clause 5.1.4a) is running; or |
| - a Scheduling Request is sent on PUCCH and is pending (as described in clause 5.4.4); or |
| - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). |

In brief, while at least one of a DRX on duration timer, a DRX inactivity timer, or a DRX retransmission timer is running, it may be called a DRX Active Time. In addition to the on duration timer that starts according to a DRX cycle, the inactivity timer for a new transmission and the retransmission timer for a retransmission are timers that are newly started due to PDCCH reception, which results in the extension of the DRX Active Time.

Therefore, a period in which a plurality of DRXs overlap may be represented as the union of DRX Active Times based on the definition in Table 6 above. Further, even if there is a time gap equal to or less than a specific value between DRX Active Times or DRX timers as in Method 1) described above, the period in which the plurality of DRXs overlap may still be defined.

### 3) Intersection of drx-onDurationTimers

A period in which a plurality of DRXs overlap may be defined/interpreted as the intersection of drx-onDurationTimers.

For example, referring to FIG. 12, when an on duration timer 1201 (of a first DRX cycle) in DRX0 starts from slot A1 and ends in slot A2, and an on duration timer 1202 (of the first DRX cycle) in DRX1 starts from slot B1 and ends in slot B2, satisfying a relationship of A1<B1<A2<B2, a period 1210 from slot B1 to slot A2 may be defined as a period in which the plurality of DRXs overlap.

### 4) Intersection of DRX Active Times

A period in which a plurality of DRXs overlap may be represented as the intersection of DRX Active Times according to the definition in Table 6 above.

For this operation, the UE may need to align monitoring operations performed in the plurality of DRXs. In other words, when an on duration of DRX1 starts during PDCCH monitoring in SSSGO of DRX0, and thus the two DRXs overlap, the UE may have to perform PDCCH monitoring in SSSGO in an overlapped period without receiving any separate indication. Accordingly, the UE may still have to perform PDCCH monitoring of the DRX (e.g., DRX0) that starts earlier, for the DRX (e.g., DRX1) that starts later in time in a slot where the plurality of DRXs start to overlap. When the plurality of DRXs start simultaneously, for example, in the same slot, an operation to be performed at the start may have to be aligned and configured commonly for the plurality of DRXs.

The UE, which follows this operation, may not operate in a significantly different manner from operating for a single DRX in terms of PDCCH monitoring and a monitoring adaptation indication, even when multiple DRXs are configured. Although a PDCCH monitoring period and its periodicity are a bit more complicated than in a single DRX depending on the configuration of each DRX, it may be the same as performing the indicated monitoring adaptation for the entire PDCCH monitoring of the UE.

When this operation is followed, it may be applicable without a change in the existing standard regarding a DRX configuration and a monitoring adaptation operation in Rel-17. As described above, the numbers of SS set groups and skipping durations that may be configured for a single BWP are determined, and a common configuration for a plurality of DRXs according to the numbers may be enabled in the current standard. Further, it may not violate the operation of, when indicated skipping agreed upon in RAN1#110 is outside a DRX Active Time, immediately terminating the indicated skipping (See Table 7 below).

**[Table 7]**

| |
|---|
| When the PDCCH monitoring adaptation field indicates to a UE to skip PDCCH monitoring for a duration on the active DL BWP of a serving cell, the UE starts skipping of PDCCH monitoring at the beginning of a first slot that is after the last symbol of the PDCCH reception providing the DCI format with the PDCCH monitoring adaptation field. If the UE transmits a PUCCH providing a positive SR after the UE detects a DCI format providing the PDCCH monitoring adaptation field indicating to the UE to skip PDCCH monitoring for the duration on the active DL BWP of the serving cell, the UE resumes PDCCH monitoring starting at the beginning of a first slot that is after a last symbol of the PUCCH transmission. If the DRX group of the serving cell is configured and enters outside Active Time, the UE terminates PDCCH skipping for the serving cell. |

Even if an indicated skipping duration exceeds the remaining Active Time of one DRX, the skipping operation is performed commonly for a plurality of DRXs and is still a DRX Active Time for other DRXs, and thus the same skipping operation may be performed continuously. When the indicated skipping duration exceeds the remaining Active Time of one DRX (e.g. DRX0), an operation of immediately terminating the DRX (e.g. DRX0) may be defined. This may be associated only with a DRX timer and serve the purpose of early termination of the DRX timer that does not necessarily need to be maintained. Even if this operation is performed, there may be no change in PDCCH monitoring of the UE.

### [Method 1-3] Individual monitoring adaptation indication and operation for overlapped period between multiple DRXs

Unlike Method 1-2, even if SS set groups and skipping durations are configured commonly for a plurality of DRXs, monitoring adaptation may be individually indicated and performed for each DRX. For example, two DRXs, DRX0 and DRX1, may be configured for the UE, and overlap only in a specific period due to their different cycles and timers. When the UE receives a monitoring adaptation indication for this overlapped period, the UE may perform an indicated operation separately for DRX0 and DRX1. When skipping is indicated for DRX0, the UE stops PDCCH monitoring in DRX0 during a skipping duration. When SSSG switching is indicated for DRX0, an SSSG is switched in DRX0.

Compared to Method 1-2, monitoring operations that the UE is performing for the plurality of DRXs may not be aligned in Method 1-3. Since the UE should be able to receive a different monitoring adaptation indication and perform an operation for each DRX, the UE does not need to align the operations. However, for power saving, it may be considered that PDCCH monitoring operations are aligned until a first monitoring adaptation indication is received in a period in which a plurality of DRXs overlap. In other words, when an on duration of DRX1 starts during PDCCH monitoring in SSSGO of DRX0 and thus the two DRXs overlap, the UE may have to perform PDCCH monitoring for SSSGO in the corresponding period without receiving any separate indication. Accordingly, the UE may have to perform the PDCCH monitoring of a previously started DRX (e.g., DRX0) in a DRX (e.g., DRX1) that starts later in time in a slot where the plurality of DRXs start to overlap. When the plurality of DRXs start simultaneously, for example, in the same slot, an operation to be performed at the start may have to be aligned and configured commonly for the plurality of DRXs. Then, when monitoring adaptation is indicated for each individual DRX, the operation may be performed accordingly.

The operation defined in Method 1-3 may also be used for power saving. In the case of a skipping indication for a specific DRX, PDCCH monitoring is completely stopped in the specific DRX, while PDCCH monitoring is still performed in the other DRXs. As a result, the effect of reducing the number of SS sets monitored by the UE is achieved. Therefore, the UE may save power.

When SSSG switching is indicated for a specific DRX, an additional configuration may be required separately. When SS sets included in commonly configured SSSGO and SSSG1 are exclusively configured such that the number of SS sets belonging to both SSSGs is minimized, it may be disadvantageous in terms of power consumption to indicate a different SSSG to be monitored in each DRX. When SSSGO is monitored in DRX0 and SSSG1 is monitored in DRX1, it may be the same as monitoring all SS sets configurable in a BWP on the UE side, and the UE may consume less power before receiving the switching indication. Therefore, in this case, when SS sets belonging to an SSSG (e.g., SSSG1) for power saving are also configured to belong to an SSSG (e.g., SSSG0) for data reception, power may be saved even if a different SSSG is monitored in each DRX. In addition, as described above, it may be advantageous in terms of power consumption to start PDCCH monitoring in a newly started DRX in alignment with a monitoring operation in an already running DRX so that they overlap, as described above.

Alternatively, PDCCH monitoring may be performed according to a preset rule in a period from a slot where DRXs start to overlap until new monitoring adaptation is received. For example, when an overlapped period between a plurality of DRXs starts, a preconfigured SSG may be monitored in the plurality of DRXs rather than a previously running DRX is followed. Therefore, as PDCCH monitoring is aligned in a period from a slot where DRXs start to overlap until reception of new monitoring adaptation according to a preset rule, the power saving effect may be achieved.

Alternatively, a DRX whose operation is to be followed may be determined by prioritizing DRXs or presetting a specific DRX, rather than the PDCCH monitoring operation of an already running DRX is followed. For example, when DRX0 has a higher priority than DRX1 or it is preset to follow a PDCCH monitoring operation of DRX0, even if DRX0 starts while the UE is operating in DRX1, it may be aligned with the operation of DRX0. As such, when the priority of each DRX is determined, the preset priority of each DRX may be applied in a rule (i.e. BD/CCE dropping rule) for calculating a maximum number of PDCCH candidates and the number of non-overlapped CCEs, which the UE is to monitor in each slot (or span). For example, when SSSGO is monitored in DRX0 with a high priority, SSSG1 is monitored in DRX1, SS set index 4 belongs only to SSSGO, and SS set index 3 belongs only to SSSG1, the UE first calculates the number of PDCCHs monitored in SS set index 3, and then the number of PDCCHs motored in SS set index 4 according to the current standard BD/CCE dropping rule. However, since the priority of each DRX is applied, the calculation is performed first for SS set index 4 belonging to SSSGO of DRX0, all other SS sets belonging to SSSGO, and then SS set index 3 belonging to SSSG1 of DRX1.

In the operation proposed in Method 1-3, a period in which a plurality of DRXs overlap may be defined differently. In Method 1-2, a period in which a plurality of DRXs overlap is defined based on a DRX Active Time, but this may be limited to a specific timer. For example, a period in which a plurality of DRXs overlap may be defined as a period in which on duration timers (and inactivity timers) of the DRXs overlap.

This may have taken into account the complexity of a UE operation and unnecessary definitions in a period in which the corresponding operation may not be required, when an individual monitoring adaptation indication and operation are defined for an entire DRX Active Time.

When the cycle of a specific DRX is short, even if a corresponding operation is defined for the UE, the corresponding operation may not be applied to the DRX. When the cycle of the DRX is short, an Active Time may be repeated with a short slot gap, and thus the corresponding operation may not need to be applied to all periods in which it overlaps with other DRXs. For example, when small traffic is periodically transmitted in a very short cycle of a specific DRX, a period in which it overlaps with another DRX may occur frequently, and it may be wasteful to apply the corresponding operation each time the overlapped period occurs.

For a method of identifying a DRX which an indication is for, operations proposed in Method 2-2 below may be applied in the same manner.

### [Method 1-4] Different monitoring adaptation indications and operations for overlapped period and non-overlapped period between multiple DRXs

As in Method 1-1, common monitoring adaptation for a plurality of DRXs may be configured differently for an overlapped period and a non-overlapped period between the plurality of DRXs. In other words, SSSGs and skipping durations that may be configured for each BWP may be configured separately for an overlapped period and a non-overlapped period. The UE may receive SSSG and skipping duration information and perform an operation separately for an overlapped period and a non-overlapped period. This may be configured/indicated to the UE by higher layer signaling (e.g. dedicated RRC). Whether the plurality of DRXs overlap may be determined based on a DRX Active Time (or drx-onDurationTimer) as described above.

For example, when the UE receives a monitoring adaptation indication, the UE may identify whether it is for an overlapped period or a non-overlapped period. Upon receipt of a skipping indication (skipping a second duration of configured skipping durations), when the indication is for an overlapped period, the UE may skip the second duration configured for the overlapped period. When the indication is for a non-overlapped period, the UE may skip the second duration configured for the non-overlapped period.

Further, when the UE receives an SSSG switching indication (switching to SSSG1) and the indication is for an overlapped period, the UE may switch to SSSG1 configured for the overlapped period. When the indication is for a non-overlapped period, the UE may switch to SSSG1 configured for the non-overlapped period.

### [Method 2] Individual monitoring adaptation operations for multiple DRXs

When a plurality of DRX Active Times are configured for the UE, monitoring adaptation may be independently configured/indicated for the plurality of DRXs. Although corresponding methods are described in the context of a scheduling DCI-based indication/operation, the methods may also be applied to non-scheduling DCI.

### [Method 2-1] Individual monitoring adaptation configurations for multiple DRXs

Up to three SS set groups or three skipping durations may be configured individually for each of a plurality of DRXs. Therefore, up to three SS set groups or three skipping durations may be configured for each DRX, and the maximum number of allowed SS set groups or skipping durations per BWP may exceed 3 for the UE. Configurable SS set groups or skipping durations may be determined from the same candidates as in the current standard.

Skipping durations for each DRX may be configured according to a configured cycle and timer of the DRX. A DRX with a short cycle and a small timer length may be configured with a short skipping duration, and a DRX with a large cycle and a large timer length may be configured with a long skipping duration.

SSSGs for each DRX may be configured in a similar manner to configuring skipping durations, in consideration of the purpose of the DRX. For example, it may be considered to include SS sets with a short periodicity and frequent monitoring occasions for heavy traffic reception of DL video in an SSSG for a DRX for the same purpose. When up to three SSSGs may be configured individually for each DRX, the complexity of a UE operation may be excessive when the UE has to consider switching too many SSSGs within a BWP. To prevent this, a method of limiting the number of SSSGs to or below a certain level may be considered. For example, up to two SSSGs (for data reception and for power saving) may be configured for one DRX. Alternatively, SSSGs may be configured overlappingly for each DRX, such that only up to three SSSGs are configured per BWP. For example, when the UE is configured with two DRXs (DRX0 and DRX1), SSSGO may be configured for data reception in DRX0, SSSG1 may be configured for data reception in DRX1, and SSSG2 may be configured for common power saving. In this way, (some) different SSSGs may be configured for each DRX while maintaining the configuration of up to three SSSGs.

A UE following this behavior may be viewed as operating each DRX independently within a BWP. It may be said that for each independent DRX, PDCCH monitoring is performed and a monitoring adaptation indication is received and performed, and some DRXs are linked to each other according to a configuration.

### [Method 2-2] Separate monitoring adaptation indication for each DRX

A method is proposed to individually specify monitoring adaptation for a plurality of DRXs. Methods of identifying a DRX which monitoring adaptation indicated to a UE is for may be as follows. The following methods may be predetermined or may be configured/indicated through a higher layer parameter. In Method 2-2, a UE operation when DCI is received in a slot within an overlapped period is proposed.

### 1) DCI field

A field for identifying a DRX may be added to DCI. A monitoring adaptation indication field is included in the DCI to control PDCCH monitoring of a UE operating in DRX. When a plurality of DRXs are configured for a UE, the field for identifying a DRX may be added to DCI including the corresponding field. Alternatively, a bit may be added to the current monitoring adaptation indication field to identify a DRX which an indication is for.

### 2) DCI format

A DRX may be identified by a DCI format. When monitoring adaptation is indicated through a specific DCI format, it may be preconfigured that the monitoring adaptation is indicated for a specific DRX. For example, DCI format x_1 may indicate monitoring adaptation for DRX0, and DCI format x_2 may indicate monitoring adaptation for DRX1.

### 3) DCI size

A] DRX may be identified by a DCI size. When DCI that may be indicated to the UE is scrambled with a C_RNTI through size alignment, three sizes may be available for the DCI. Therefore, DCIs with different sizes may indicate monitoring adaptation for different DRXs. For example, k-bit DCI format x_1 may indicate monitoring adaptation for DRX0, and (k+a)-bit DCI format x_1 may indicate monitoring adaptation for DRX1.

### 4) SS set (and/or CORESET)

A DRX may be identified by an SS set (and/or CORESET) in which DCI is received. The UE may be configured with up to 10 SS sets (and up to 4 CORESETs) per BWP and receive DCI through the SS sets. Therefore, when the UE receives DCI in specific SS sets, monitoring adaptation may be indicated for DRX0, and when the UE receives DCI in other specific SS sets, monitoring adaptation may be indicated for DRX1. Specific SS sets may be configured in the form of an SSSG. For example, in the case where SSSGO and SSSG2 are configured for DRX0, and SSSG1 and SSSG2 are configured for DRX1 as in the example of Method 2-1, when the UE receives DCI in an SS set belonging to SSSGO, the UE may receive an indication for DRX0, and when the UE receives DCI in an SS set belonging to SSSG1, the UE may receive an indication for DRX1. In order to clearly identify a DRX which an indication is for, the UE may not expect to receive DCI including a monitoring adaptation indication in SS sets belonging to both SSSGs in an overlapped period.

Similarly, a DRX may be identified by a CORESET. The UE may identify a DRX which an indication is for, based on a linked CORESET of an SS set in which DCI is received.

### 5) Different interpretations for period in which multiple DRXs overlap

When a slot carrying DCI including a monitoring adaptation indication field of up to 2 bits according to the current standard is within a period in which a plurality of DRXs overlap, the UE may interpret the field differently. For example, the MSB of the existing 2-bit field may be used to identify a DRX, and the LSB of the field may indicate an SSSG to be switched or one of two skipping durations, unlike the conventional method. An operation indicated by the LSB may be predetermined or may be configured/indicated through higher layer signaling. In another example, the MSB may identify a DRX, while when the LSB is 0, it may indicate skipping for a predetermined duration, and when the LSB is 1, it may indicate switching (similar to toggling) between an SSSG for data reception and an SSSG for power saving.

### 6) Indication based on DRX priority

As proposed above, DRXs may be prioritized or a DRX which an indication is for in an overlapped period may be predetermined. In this case, it may be preconfigured between the UE and the BS that monitoring adaptation indicated for an overlapped period is always for a specific DRX, and the operation may be performed accordingly.

### [Method 2-3] UE operation based on time point when SSSG switching is applied after application delay

Unlike Method 2-2, a UE operation is proposed based on a time point when indicated monitoring adaptation is actually applied. In the case of SSSG switching, a non-zero application delay (a delay from a reception time of DCI indicating an operation to a time of performing the actual UE operation) occurs significantly as several slots. Therefore, a UE operation may be defined based on a slot in which an SSSG switching operation is performed after an application delay from a slot in which DCI is received. In the case of PDCCH skipping, since the application delay is zero, a UE operation based on an actual operation time and a UE operation based on a DCI reception time may be the same.

In the case where the UE receives DCI including an SSSG switching indication in slot A and performs an SSSG switching operation in slot B, when two DRXs are configured, three cases may be considered in slot B: DRX0, DRX1, and overlapped. Accordingly, three pairs of SSSGs (for data reception and for power saving) may be configured. Therefore, the UE may apply the indication received in slot A according to the DRX state of slot B. When only DRX0 operates, SSSG switching configured accordingly may be performed, and when the two DRXs operate overlapped, SSSG switching configured accordingly may be performed.

Alternatively, two pairs of SSSGs may be considered by distinguishing between a case where only one DRX operates and a case where DRXs overlap each other.

In general, the BS may predict the DRX state of slot B in slot A and transmit an indication accordingly. However, when an overlapped period is configured based on an entire DRX Active Time, a DRX timer may be extended and thus the exact DRX operation state of slot B may not be known. Since there is no case of early DRX termination, only a change from the expectation that only one DRX operates to a case of overlap between two DRXs may be considered. Therefore, when this is considered for an SSSG configuration and indication in an overlapped period, there may be no problem in defining an operation.

### [Method 2-4] UE operation in overlapped period between multiple DRXs

In the case where SSSGs and skipping durations are configured individually for each DRX (Method 2-1) and monitoring adaptation for this is individually indicated (Method 2-2), a UE operation in an overlapped period between a plurality of DRXs is proposed. The definition of an overlapped period between a plurality of DRXs may follow the proposal in Method 1-2.

In the case of a skipping operation in a period in which a plurality of DRXs overlap, even if a skipping duration is individually configured, the operation may be performed by receiving common skipping information for the plurality of DRXs for the overlapped period. Skipping is performed based on each DRX according to a PDCCH monitoring adaptation indication field. For example, when the field in received DCI is 01, the PDCCH skipping operation is performed for a first duration configured in each DRX.

In the case of an operation only for each DRX, the corresponding indication may be distinguished according to Method 2-2. Skipping in only a specific DRX among a plurality of DRXs may be expected to have a power saving effect similar to SSSG switching, since PDCCH monitoring is stopped in an SSSG corresponding to the DRX in the case of a different SSSG configuration for each DRX. In addition, a skipping indication for a specific DRX (e.g., DRX1) may be an indication from the BS that there is no need to monitor traffic in the DRX (DRX1).

A switching operation may also be performed in a period in which a plurality of DRXs overlap by receiving common indication information for the plurality of DRXs for the overlapped period, even if SSSGs are individually configured. Switching is performed based on each DRX according to a PDCCH monitoring adaptation indication field. For example, when the field in received DCI is 01, switching to SSSGO configured in each DRX is performed.

In the case of an operation only for each DRX, the corresponding indication may be distinguished according to Method 2-2. Switching only in a specific DRX among a plurality of DRXs may need to be configured/indicated in consideration of a power saving effect expected from SSSG switching in the case of a different SSSG configuration for each DRX. For example, when SSSGs configured such that there is no intersection of SSGs between a plurality of DRXs are monitored, it may result in increased power consumption, and thus a configuration/indication to prevent this may be required.

The BS may preconfigure or pre-indicate how the UE will operate based on each monitoring adaptation indication.

When different monitoring adaptation indications are received at the same time (e.g., in the same slot), it may be determined which indication to prioritize. When duplicate indications for the same DRX are received at the same time, an earlier indication (an indication in an earlier symbol) is performed, and a subsequent indication is not expected. In other words, the UE may not perform the subsequent indication.

When the indications are for different DRXs, they may be performed individually for the respective DRXs even if they are received at the same time.

### [Method 3] Monitoring adaptation indication in multi-cell environment

When the UE receives data for multiple cells, it may indicate a DRX which an indication is for, for the different cells. In other words, it may indicate a DRX which a monitoring adaptation indication is for, regardless of a scheduled cell. Although the method is described in the context of a scheduling DCI-based indication/operation, it may also be applied to non-scheduling DCI.

A plurality of DRXs may be configured for each cell as in the above methods. Therefore, monitoring adaptation for the plurality of DRXs or a specific DRX may be indicated for different cells. For example, DCI may be received in a scheduling cell (i.e. cell 1), and indicate monitoring adaptation for a DRX in a scheduled cell (i.e. cell 2). In addition, a monitoring adaptation indication for cell 2 and a monitoring adaptation indication for cell 1 may be included in the same DCI. In other words, monitoring adaptation for DRXs of different cells may be indicated separately by one DCI.

In the proposed method, cells may be distinguished similarly to distinguishing DRXs in Method 2-2. A method of distinguishing cells similarly to the proposed DRX distinction in Method 2-2 may be added.

In order to support multiple flows of an XR service, multiple DRXs are configured for a UE, and a configuration/indication operation is proposed to indicate monitoring adaptation for this. Through this, the UE may effectively support the multiple flows of the XR service, and operate by receiving a monitoring adaptation indication for power saving without any problem.

A method is proposed which indicates/configures a PDCCH monitoring pattern for reducing power consumption, while enabling a UE configured with a multi-DRX operation to supporting multiple flows of an XR service, and operating the UE accordingly. Through this, a DRX operation for receiving an XR packet may be performed while power consumption is reduced by controlling PDCCH monitoring.

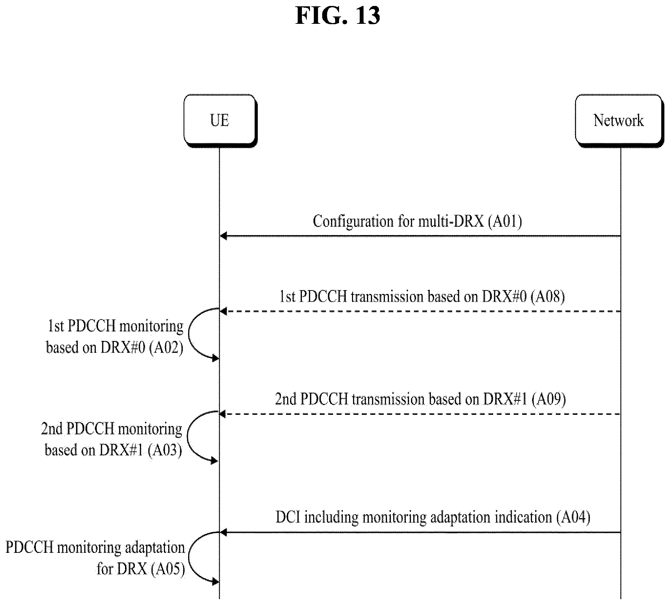

FIG. 13 is a diagram illustrating monitoring adaptation of a UE configured with a multi-DRX operation.

Referring to FIG. 13, the UE may receive a multi-DRX configuration from a network (A01). The multi-DRX configuration may include a DRX cycle, a DRX timer, and/or monitoring adaptation-related information (e.g., search space set groups (SSSGs) and skipping durations) for each DRX.

In an example, although not shown in FIG. 13, the network may transmit a wake-up signal (not shown) to the UE, after providing the multi-DRX configuration (A01), and the UE may start a DRX Active Time based on the wake-up signal according to an embodiment. Alternatively, the wake-up signal may be omitted.

The UE may start an Active Time in each DRX based on the multi-DRX configuration. For example, in FIG. 13, it is assumed that the multi-DRX configuration includes DRX0 and DRX1. The UE may perform first PDCCH monitoring in an Active Time of DRX0 (A02) and second PDCCH monitoring in an Active Time of DRX1 (A03).

The network indicates monitoring adaptation to the UE through DCI (A04). The DCI may include information indicating a DRX which the monitoring adaptation indication included in the DCI is for (e.g., Method 1 and Method 2). Further, in the case of multiple cells, the DCI may include information indicating a cell which the monitoring adaptation indication included in the DCI is for. (e.g., Method 3).

The UE may perform the indicated PDCCH monitoring adaptation in the corresponding DRX (A05).

For example, the corresponding DRX for which the PDCCH monitoring adaptation is indicated may be an individual DRX such as DRX0 or DRX1, or may include a plurality of DRXs.

For example, the corresponding DRX which the PDCCH monitoring adaptation is indicated for may be different DRXs in multiple cells.

According to the proposed methods, a multi-DRX operation for supporting multiple flows and a PDCCH monitoring adaptation operation for the same may be supported. Particularly, monitoring adaptation may be indicated by specifying a DRX in a multi-DRX environment. Through this, multiple flows of an XR service may be smoothly supported, while unnecessary PDCCH monitoring in each DRX may be reduced, resulting in a power saving effect.

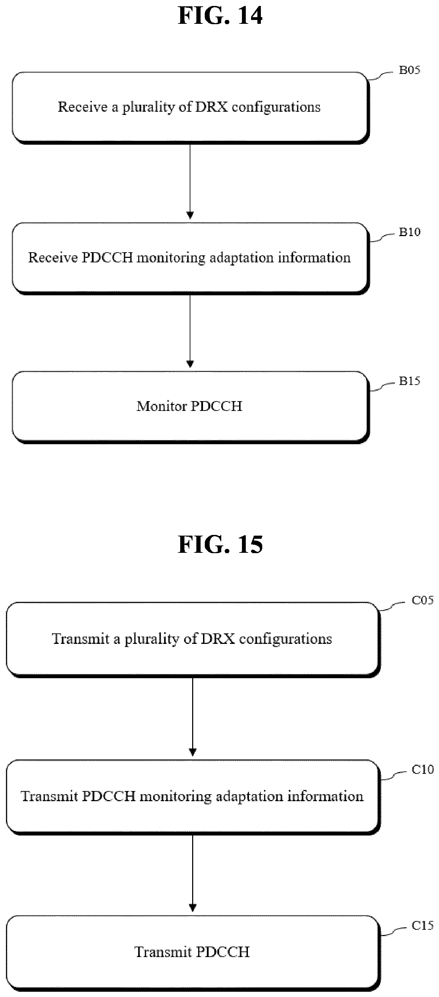

FIG. 14 is a diagram illustrating signal reception of a UE according to an embodiment.

Referring to FIG. 14, the UE may receive a plurality of DRX configurations (B05).

The UE may receive PDCCH monitoring adaptation information related to at least one of the plurality of DRX configurations (B10).

The UE may monitor a PDCCH based on each DRX on-duration of the plurality of DRX configurations and the PDCCH monitoring adaptation information (B15).

Based on a gap or overlap between a first time period of a first DRX configuration and a second time period of a second DRX configuration among the plurality of DRX configurations, monitoring of a first PDCCH may be performed during the first time period and the second time period, commonly based on the first PDCCH monitoring adaptation information.

Based on the first time period and the second time period overlapping at least partially, monitoring of the first PDCCH may be performed throughout the first time period and the second time period based on the first PDCCH monitoring adaptation information.

Based on the second time period starting within a predetermined time from an end of the first time period, the monitoring of the first PDCCH started in the first time period may be performed until an end of the second time period.

The first PDCCH monitoring adaptation information may be related to the first DRX configuration. The first time period may be a DRX on-duration or DRX active time of the first DRX configuration, and the second time period may be a DRX on-duration or DRX active time of the second DRX configuration. The first time period may start earlier than the second time period.

Monitoring of a second PDCCH may be performed based on second PDCCH monitoring adaptation information during a third time period of the second DRX configuration different from the second time period.

The first PDCCH monitoring adaptation information may be for monitoring a first group of search space sets or skipping monitoring of at least one search space set among search space sets configured for the UE.

The first time period of the first DRX configuration and the second time period of the second DRX configuration may be configured according to different DRX cycles.

FIG. 15 is a diagram illustrating signal transmission of a BS according to an embodiment.

Referring to FIG. 15, the BS may transmit a plurality of DRX configurations (C05).

The BS may transmit PDCCH monitoring adaptation information related to at least one of the plurality of DRX configurations (C10).

The BS may transmit a PDCCH based on each DRX on-duration of the plurality of DRX configurations and the PDCCH monitoring adaptation information (C15).

Based on a gap or overlap between a first time period of a first DRX configuration and a second time period of a second DRX configuration among the plurality of DRX configurations, the BS may perform transmission of a first PDCCH during the first time period and the second time period commonly based on first PDCCH monitoring adaptation information.

Based on the first time period and the second time period overlapping at least partially, the first PDCCH monitoring adaptation information may be applied throughout the first time period and the second time period.

Based on the second time period starting within a predetermined time from an end of the first time period, the application of the first PDCCH started in the first time period may be performed until an end of the second time period.

The first PDCCH monitoring adaptation information may be related to the first DRX configuration. The first time period may be a DRX on-duration or DRX active time of the first DRX configuration, and the second time period may be a DRX on-duration or DRX active time of the second DRX configuration. The first time period may start earlier than the second time period.

Transmission of a second PDCCH may be performed based on second PDCCH monitoring adaptation information during a third time period of the second DRX configuration different from the second time period.

The first PDCCH monitoring adaptation information may be for indicating to a UE to monitor a first group of search space sets or to skip monitoring of at least one search space set among search space sets configured for the UE.

The first time period of the first DRX configuration and the second time period of the second DRX configuration may be configured according to different DRX cycles.

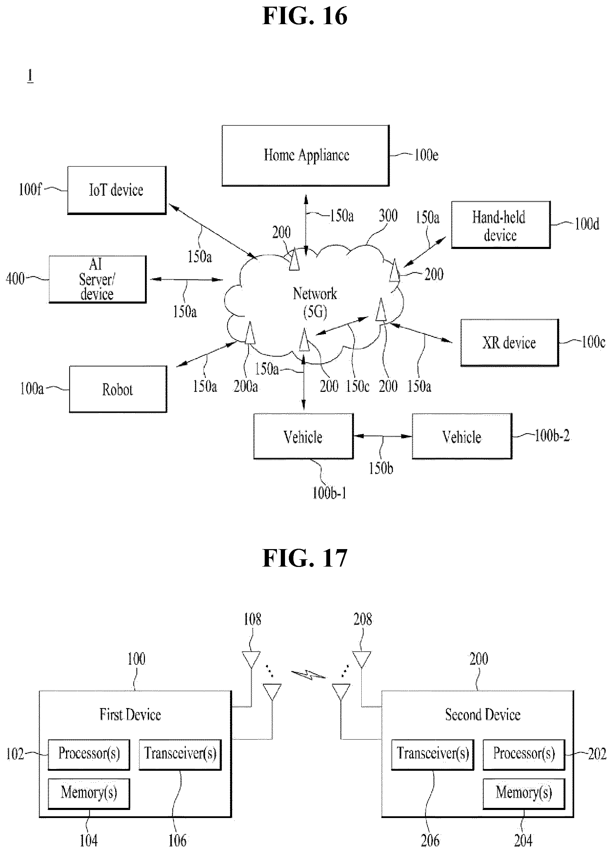

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

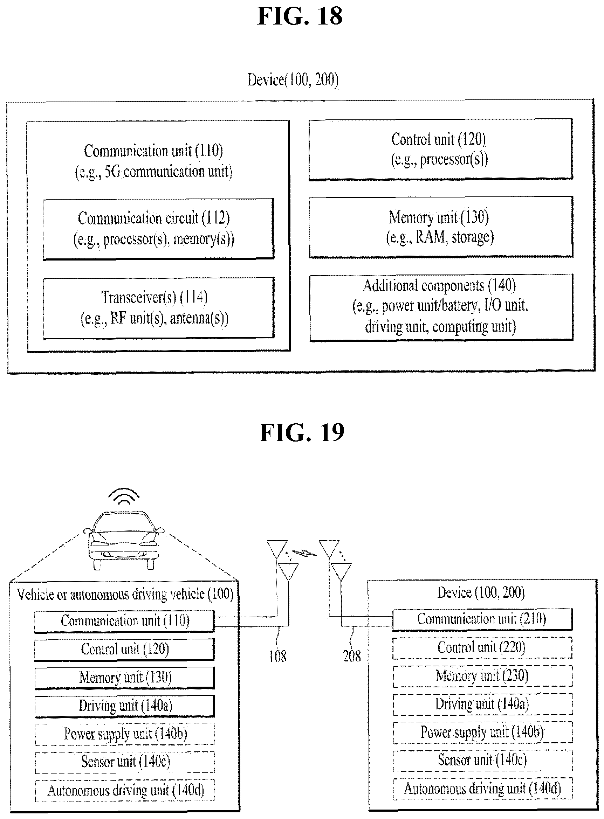

FIG. 18 illustrates another example of a wireless device applied to the present disclosure. The wireless device may be implemented in various forms according to a use-case/service (refer to FIG. 16).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method of receiving a signal by a user equipment (UE) in a wireless communication system, the method comprising:
receiving a plurality of discontinuous reception (DRX) configurations;
receiving physical downlink control channel (PDCCH) monitoring adaptation information related to at least one of the plurality of DRX configurations; and
monitoring a PDCCH based on each DRX on-duration of the plurality of DRX configurations and the PDCCH monitoring adaptation information,
wherein based on a gap or overlap between a first time period of a first DRX configuration and a second time period of a second DRX configuration among the plurality of DRX configurations, monitoring of a first PDCCH is performed during the first time period and the second time period commonly based on first PDCCH monitoring adaptation information.

2. The method of claim 1, wherein based on the first time period and the second time period at least partially overlapping, the monitoring of the first PDCCH is performed throughout the first time period and the second time period based on the first PDCCH monitoring adaptation information.

3. The method of claim 1, wherein based on the second time period starting within a predetermined time from an end of the first time period, the monitoring of the first PDCCH started in the first time period is performed until an end of the second time period.

4. The method of claim 1, wherein the first PDCCH monitoring adaptation information is related to the first DRX configuration.

5. The method of claim 4, wherein the first time period is a DRX on-duration or DRX active time of the first DRX configuration, and the second time period is a DRX on-duration or DRX active time of the second DRX configuration, and
wherein the first time period starts earlier than the second time period.

6. The method of claim 1, wherein monitoring of a second PDCCH is performed based on second PDCCH monitoring adaptation information during a third time period of the second DRX configuration different from the second time period.

7. The method of claim 1, wherein the first PDCCH monitoring adaptation information is for monitoring a first group of search space sets or skipping monitoring of at least one search space set among search space sets configured for the UE.

8. The method of claim 1, wherein the first time period of the first DRX configuration and the second time period of the second DRX configuration are configured according to different DRX cycles.

9. A computer-readable recording medium storing a program for performing the method of claim 1.

10. A device for wireless communication, the device comprising:
a memory configured to store instructions; and
a processor configured to perform operations by executing the instructions,
wherein the operations of the processor include:
receiving a plurality of discontinuous reception (DRX) configurations;
receiving physical downlink control channel (PDCCH) monitoring adaptation information related to at least one of the plurality of DRX configurations; and
monitoring a PDCCH based on each DRX on-duration of the plurality of DRX configurations and the PDCCH monitoring adaptation information, and
wherein based on a gap or overlap between a first time period of a first DRX configuration and a second time period of a second DRX configuration among the plurality of DRX configurations, monitoring of a first PDCCH is performed during the first time period and the second time period commonly based on first PDCCH monitoring adaptation information.

11. The device of claim 10, further including:
a transceiver transmitting or receiving a wireless signal under control of the processor,
wherein the device is a user equipment (UE) operating in a wireless communication system.

12. The device of claim 10, wherein the device is a signal processing device configured to control a user equipment (UE) operating in a wireless communication system.

13. A method of transmitting a signal by a base station (BS) in a wireless communication system, the method comprising:
transmitting a plurality of discontinuous reception (DRX) configurations;
transmitting physical downlink control channel (PDCCH) monitoring adaptation information related to at least one of the plurality of DRX configurations; and
transmitting a PDCCH based on each DRX on-duration of the plurality of DRX configurations and the PDCCH monitoring adaptation information,
wherein based on a gap or overlap between a first time period of a first DRX configuration and a second time period of a second DRX configuration among the plurality of DRX configurations, transmission of a first PDCCH is performed during the first time period and the second time period commonly based on first PDCCH monitoring adaptation information.

14. A computer-readable recording medium storing a program for performing the method of claim 13.

15. A base station (BS) for wireless communication, the BS comprising:
a memory configured to store instructions; and
a processor configured to perform operations by executing the instructions,
wherein the operations of the processor include:
transmitting a plurality of discontinuous reception (DRX) configurations;
transmitting physical downlink control channel (PDCCH) monitoring adaptation information related to at least one of the plurality of DRX configurations; and
transmitting a PDCCH based on each DRX on-duration of the plurality of DRX configurations and the PDCCH monitoring adaptation information, and
wherein based on a gap or overlap between a first time period of a first DRX configuration and a second time period of a second DRX configuration among the plurality of DRX configurations, transmission of a first PDCCH is performed during the first time period and the second time period commonly based on first PDCCH monitoring adaptation information.
